# EUROPEAN PATENT APPLICATION

(11) **EP 3 672 307 A1**
(43) Date of publication of application: **24.06.2020**
(21) Application number: 19200259.0
(22) Date of filing: 27.09.2019
(51) Int. Cl.: H04W 12/04, H04L 29/06

(54) **NETWORK SECURITY SYSTEM AND NETWORK SECURITY METHOD**

(30) Priority: 22.12.2018 TW 107146601
(71) Applicant: Industrial Technology Research Institute, Hsinchu 31040 Taiwan (TW)
(72) Inventor: LU, Shu-Ping, New Taipei City 243 (TW); HO, Cheng-Yun, Taipei City 111 (TW); LEI, Chin-Laung, Taipei City 106, (TW); HUANG, Szu-Hsien, Toufen City, Miaoli County 351, (TW); CHEN, Xin-Chen, New Taipei City 243, (TW)
(74) Representative: Michalski Hüttermann & Partner Patentanwälte mbB

(57) **Abstract**

A network security system includes: a plurality of sub-nodes and an identity authentication device. The identity authentication device is configured to generate an initial dynamic subnet key, and group the sub-nodes into one or more subnets according to the initial dynamic subnet key and at least one preconfigured characteristic parameter. For each subnet of the one or more subnets, the identity authentication device respectively selects a virtual authenticator to manage each of the sub-nodes of each of the subnets. When a new member sub-node joins one subnet of the one or more subnets, each of the sub-nodes existed in the one subnet and the virtual authenticator of the one subnet each input a current version dynamic subnet key into a hash algorithm to update the current version dynamic subnet key for performing a consensus update process.

## Description

### TECHNICAL FIELD

The present disclosure relates to a network security system and a network security method suitable for subnet security mechanism.

### BACKGROUND

In general, wireless ad hoc network (WANET) is dynamic and decentralized because of its topology structure and the frequently change of the membership. It causes security issues. For example, security vulnerabilities generated by nodes joining, leaving the network frequently, and/or where to configure the authenticator, and so on.

Since the number of nodes in the wireless ad hoc network changes frequently, how to quickly adjust the security mechanism, such as the dynamic trust relationship between nodes. And, how to make the wireless ad hoc network have faster and more reliable network security in dynamic topology and member management is a subject for further research.

Therefore, how to provide a network security system and network security method has become one of the challenges in the field.

### SUMMARY

The present disclosure provides a network security system. The network security system comprises a plurality of sub-nodes and an identity authentication device. The identity authentication device is configured to generate an initial dynamic subnet key, group the sub-nodes into one or more subnets according to the initial dynamic subnet key and at least one preconfigured character parameter of each of the sub-nodes. For each subnet in the one or more subnets, the identity authentication device respectively selects a virtual authenticator from each of the one or more subnets to manage each of the sub-nodes in each of the one or more subnets. When a new sub-node member joins one subnet of the one or more subnets, each sub-node already existing in the one subnet and the virtual authenticator of the one subnet each input a current version dynamic subnet key into a hash algorithm to update the current version dynamic subnet key, for performing a cross-authentication process between the virtual authenticator and the new sub-node member, and performing a consensus update process of the virtual authenticator and each sub-node already existing in the one subnet, so that each sub-node existing in the one subnet and the virtual authenticator reach a consensus. When an old sub-node member leaves the one subnet of the one or more subnets, the virtual authenticator of the one subnet inputs the current version dynamic subnet key and a random number into the hash algorithm to update the current version dynamic subnet key, and transmits the updated version of the current version dynamic subnet key to each of the remaining sub-nodes in the one subnet to perform the consensus update process of the virtual authenticator and each of the remaining sub-nodes in the one subnet, so as to make the remaining sub-nodes in the one subnet and the virtual authenticator reach the consensus.

The present disclosure provides a network security method. The network security method comprises: generating an initial dynamic subnet key; and grouping a plurality of sub-nodes into one or more subnets according to the initial dynamic subnet key and at least one preconfigured character parameter of each of the sub-nodes, wherein, for each subnet in the one or more subnets, an identity authentication device respectively selects a virtual authenticator from each of the one or more subnets to manage each of the sub-nodes in each of the one or more subnets, wherein when a new sub-node member joins one subnet of the one or more subnets, each sub-node already existing in the one subnet and the virtual authenticator of the one subnet each input a current version dynamic subnet key into a hash algorithm to update the current version dynamic subnet key, for performing a cross-authentication process between the virtual authenticator and the new sub-node member, and performing a consensus update process of the virtual authenticator and each sub-node already existing in the one subnet, so that each sub-node existing in the one subnet and the virtual authenticator reach a consensus, and wherein when an old sub-node member leaves the one subnet of the one or more subnets, the virtual authenticator of the one subnet inputs the current version dynamic subnet key and a random number into the hash algorithm to update the current version dynamic subnet key, and transmits the updated version of the current version dynamic subnet key to each of the remaining sub-nodes in the one subnet to perform the consensus update process of the virtual authenticator and each of the remaining sub-nodes in the one subnet, so as to make the remaining sub-nodes in the one subnet and the virtual authenticator reach the consensus.

The network security system and the network security method shown in the present invention can perform distributed dynamic adjustment security authentication more quickly when the number of nodes in the network (for example, wireless ad hoc network) is frequently changed, so as to achieve the effect of safely protecting the data which user wants to store or transfer.

The invention concerns a network security system, comprising:
a plurality of sub-nodes; and
an identity authentication device, configured to generate an initial dynamic subnet key, group the sub-nodes into one or more subnets according to the initial dynamic subnet key and at least one preconfigured character parameter of each of the sub-nodes,
wherein, for each subnet in the one or more subnets, the identity authentication device respectively selects a virtual authenticator from each of the one or more subnets to manage each of the sub-nodes in each of the one or more subnets,
wherein when a new sub-node member joins one subnet of the one or more subnets, each sub-node already existing in the one subnet and the virtual authenticator of the one subnet each input a current version dynamic subnet key into a hash algorithm to update the current version dynamic subnet key, for performing a cross-authentication process between the virtual authenticator and the new sub-node member, and performing a consensus update process of the virtual authenticator and each sub-node already existing in the one subnet, so that each sub-node existing in the one subnet and the virtual authenticator reach a consensus, and
wherein when an old sub-node member leaves the one subnet of the one or more subnets, the virtual authenticator of the one subnet inputs the current version dynamic subnet key and a random number into the hash algorithm to update the current version dynamic subnet key, and transmits the updated version of the current version dynamic subnet key to each of the remaining sub-nodes in the one subnet to perform the consensus update process of the virtual authenticator and each of the remaining sub-nodes in the one subnet, so as to make the remaining sub-nodes in the one subnet and the virtual authenticator reach the consensus.

Preferably, the sub-nodes are covered by a signal transmission range of the identity authentication device, the identity authentication device respectively obtains the at least one preconfigured character parameter of each of the sub-nodes to generate a plurality of group matrices according to the initial dynamic subnet key and the at least one preconfigured character parameter corresponding to each of the sub-nodes respectively, generates a plurality of group distance parameters according to the group matrices, and groups sub-nodes corresponding to the group distance parameters that are less than a feature threshold as a subnet of the one or more subnets.

Preferably, the identity authentication device determines whether a current total number of the one or more subnets reaches a threshold value, if the identity authentication device determines that the current total number of the one or more subnets has not reached the threshold value, the identity authentication device merges two subnets of the one or more subnets having similar feature thresholds.

Preferably, the consensus update process further comprising:
each of the sub-nodes in the one subnet inputs the updated current version dynamic subnet key and/or data of a sub-node member of the one subnet into a hash algorithm to respectively generate a sub-node ledger digest; and
the virtual authenticator inputs the updated current version dynamic subnet key and/or data of the sub-node member of the one subnet into the hash algorithm to generate an expected ledger digest, and when the virtual authenticator determines that each sub-node ledger digest of the sub-nodes are the same as the expected ledger digest, then each of the sub-nodes in the one or more subnets and the virtual authenticator reach the consensus.

Preferably, in accordance with the new sub-node member joins the one or more subnets or the old sub-node member leaves the one or more subnets to trigger the consensus update process, the data of the sub-node member of the one subnet is data of the new sub-node member joins the one or more subnets or data of the old sub-node member leaves the one or more subnets correspondingly, and wherein a way that the hash algorithm is inputted to generate each of the sub-node ledger digest and the expected ledger digest is predefined.

Preferably, at least one preconfigured character parameter is at least one or a combination of: a communication range, a workload amount, a data capacity, a number of the identity authentication devices, a number of dynamic subnet keys, and a preset identification code.

Preferably, the identity authentication device respectively calculates the at least one preconfigured character parameter of each of the sub-nodes of each of the one or more subnets to respectively generate a candidate parameter corresponding to the identity authentication device and each of the sub-nodes in the each of the one or more subnets, sorts values of the candidate parameters to generate a candidate list of each of the one or more subnets, and selects according to one of at least one sub-node corresponding to the largest one of the values of the candidate parameters as the virtual authenticator of each the one or more subnet.

Preferably, each of the sub-nodes in the candidate list of the one subnet performs a failover mechanism, and the failover mechanism comprises:
each sub-node in the candidate list of the one subnet periodically backs up data of the one subnet; and
when the virtual authenticator of the one subnet fails or wants to leave, and a service request initiated by a service requesting sub-node in the one subnet is failed, respond to the service request, update another virtual authenticator in the candidate list of the one subnet to become new virtual authenticator of the one subnet.

Preferably, the another virtual authenticator is selected from the candidate list of the one subnet.

Preferably, each of the sub-nodes of each of the one or more subnets takes a token ring in turn, and sub-node that obtains the token ring becomes the virtual authenticator of each of the subnets.

Preferably, during the cross-authentication process, the virtual authenticator generates a signature by a digital signature process or generates a message authentication code by a message authentication process, encrypts the signature or the message authentication code with all data of the one subnet by a communication key to generate an encrypted data, and transmits the encrypted data to the new sub-node member, so that the new sub-node member decrypts according to the communication key to obtain all the data of the one subnet, the signature or the message authentication code, and performs the digital signature process to verify the signature or performs the message authentication process to verify the message authentication code, to perform data update of sub-nodes of the one subnet, and wherein the updated version of the current version dynamic subnet key and the data of the new sub-node member are comprised in all the data of the one subnet.

The invention further concerns a network security method, comprising:
generating an initial dynamic subnet key; and
grouping a plurality of sub-nodes into one or more subnets according to the initial dynamic subnet key and at least one preconfigured character parameter of each of the sub-nodes,
wherein, for each subnet in the one or more subnets, an identity authentication device respectively selects a virtual authenticator from each of the one or more subnets to manage each of the sub-nodes in each of the one or more subnets,
wherein when a new sub-node member joins one subnet of the one or more subnets, each sub-node already existing in the one subnet and the virtual authenticator of the one subnet each input a current version dynamic subnet key into a hash algorithm to update the current version dynamic subnet key, for performing a cross-authentication process between the virtual authenticator and the new sub-node member, and performing a consensus update process of the virtual authenticator and each sub-node already existing in the one subnet, so that each sub-node existing in the one subnet and the virtual authenticator reach a consensus, and
wherein when an old sub-node member leaves the one subnet of the one or more subnets, the virtual authenticator of the one subnet inputs the current version dynamic subnet key and a random number into the hash algorithm to update the current version dynamic subnet key, and transmits the updated version of the current version dynamic subnet key to each of the remaining sub-nodes in the one subnet to perform the consensus update process of the virtual authenticator and each of the remaining sub-nodes in the one subnet, so as to make the remaining sub-nodes in the one subnet and the virtual authenticator reach the consensus.

Preferably the sub-nodes are covered by a signal transmission range of the identity authentication device, the network security method further comprising:
respectively obtaining the at least one preconfigured character parameter of each of the sub-nodes by the identity authentication device to generate a plurality of group matrices according to the initial dynamic subnet key and the at least one preconfigured character parameter corresponding to each of the sub-nodes respectively, generating a plurality of group distance parameters according to the group matrices, and grouping sub-nodes corresponding to the group distance parameters that are less than a feature threshold as a subnet of the one or more subnets.

Preferably, the method further comprises:
determining whether a current total number of the one or more subnets reaches a threshold value; and
if the identity authentication device determines that the current total number of the one or more subnets has not reached the threshold value, the identity authentication device merges two subnets of the one or more subnets having similar feature thresholds.

Preferably, performing the consensus update process further comprising:
each of the sub-nodes in the one subnet inputs the updated current version dynamic subnet key and/or the data of a sub-node member of the one subnet into a hash algorithm to respectively generate a sub-node ledger digest; and
the virtual authenticator inputs the updated current version dynamic subnet key and/or data of the sub-node member of the one subnet into the hash algorithm to generate an expected ledger digest, and when the virtual authenticator determines that each sub-node ledger digest of the sub-nodes are the same as the expected ledger digest, then each of the sub-nodes in the one or more subnets and the virtual authenticator reach the consensus.

Preferably, the method further comprises:
calculating the at least one preconfigured character parameter of each of the sub-nodes of each of the one or more subnets to respectively generate a candidate parameter corresponding to the identity authentication device and each of the sub-nodes in the each of the one or more subnets; and
sorting values of the candidate parameters to generate a candidate list of each of the one or more subnets, and selects according to one of at least one sub-node corresponding to the largest one of the values of the candidate parameters as the virtual authenticator of each the one or more subnet.

Preferably, each of the sub-nodes in the candidate list of the one subnet performs a failover mechanism, and the failover mechanism comprises:
each sub-node in the candidate list of the one subnet periodically backs up data of the one subnet; and
when the virtual authenticator of the one subnet fails or wants to leave, and a service request initiated by a service requesting sub-node in the one subnet is failed, respond to the service request, update another virtual authenticator in the candidate list of the one subnet to become a new virtual authenticator of the one subnet.

Preferably, during the cross-authentication process, the virtual authenticator generates a signature by a digital signature process or generates a message authentication code by a message authentication process, encrypts the signature or the message authentication code with all data of the one subnet by a communication key to generate an encrypted data, and transmits the encrypted data to the new sub-node member, so that the new sub-node member decrypts according to the communication key to obtain all the data of the one subnet, the signature or the message authentication code, and performs the digital signature process to verify the signature or performs the message authentication process to verify the message authentication code to perform data update of sub-nodes of the one subnet, and wherein the updated version of the current version dynamic subnet key and the data of the new sub-node member are comprised in all the data of the one subnet.

### BRIEF DESCRIPTION OF THE DRAWINGS

FIGS. 1A-1B are schematic diagrams of a network security system in accordance with one embodiment of the present disclosure.
FIGS. 2A-2B are flowcharts of a network security method in accordance with one embodiment of the present disclosure.
FIG. 3 is a flowchart of a sub-node grouping process in accordance with one embodiment of the present disclosure.

### DETAILED DESCRIPTION

The following description is of the best-contemplated mode of carrying out the invention. This description is made for the purpose of illustrating the general principles of the invention and should not be taken in a limiting sense. The scope of the invention is best determined by reference to the appended claims.

The present invention will be described with respect to particular embodiments and with reference to certain drawings, but the invention is not limited thereto and is only limited by the claims. It will be further understood that the terms "comprises," "comprising," "comprises" and/or "including," when used herein, specify the presence of stated features, integers, steps, operations, elements, and/or components, but do not preclude the presence or addition of one or more other features, integers, steps, operations, elements, components, and/or groups thereof.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

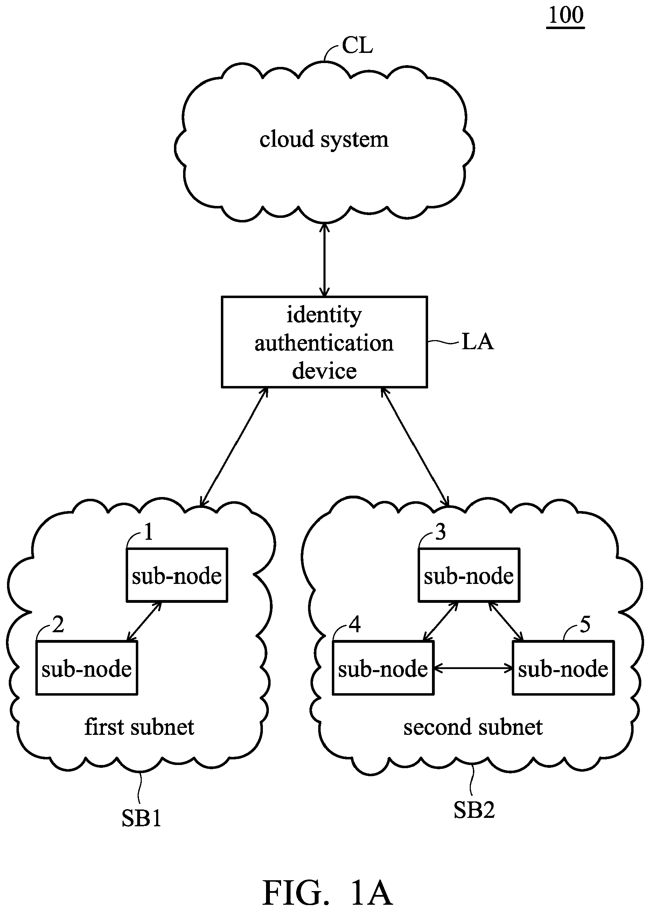

Please refer to FIGS. 1A-1B, FIGS. 1A-1B are schematic diagrams of a network security system 100 in accordance with one embodiment of the present disclosure. In one embodiment, a network security system 100 includes multiple sub-nodes (for example, sub-node 1 to sub-node 5) and an identity authentication device LA. In one embodiment, the identity authentication device LA is configured between sub-node 1 to sub-node 5 and the cloud system CL. The identity authentication device LA can upload data to the cloud system CL. In one embodiment, the identity authentication device LA can be a server or other electronic device having better computing power and processing capabilities. However, it is not limited thereto. In one embodiment, for example, the sub-node 1 and the sub-node 3 can be a gateway, and the sub-node 2, the sub-node 4 and the sub-node 5 can be terminal devices. However, it is not limited thereto. In one embodiment, the gateway can be a base station, a mobile edge computing platform, a roadside unit or other electronic device having computing power. However, it is not limited thereto. In one embodiment, the terminal device can be a cellphone, a driving navigation device, a drone, or other electronic device having basic calculation ability. However, it is not limited thereto.

In one embodiment, the network security system 100 can be understood as a multi-layer structure. That is, the lowermost sub-nodes are the terminal devices, the upper layer of the sub-nod is the gateway devices, and the upper layer of the gateway devices is the identity authentication device LA, and the top layer is the cloud system CL. The electronic device located above the upper layer is more computationally capable, and is suitable for a large number of or complex operations. On the other hand, a program requiring a lower amount of computation runs on the lowermost sub-node. The multi-layer structure can be controlled by the remote cloud computing to change the subnet authority to the local electronic device, so that the decentralized control effect with short delay time, fast processing and fast transmission speed can be achieved.

Refer to FIG. 1A, a first subnet SB1 includes sub-node 1 and sub-node 2. A second subnet SB2 includes sub-node 3, sub-node 4, and sub-node 5. In other words, sub-node 1 and sub-node 2 belong to the same vertical subnet, and sub-node 3, sub-node 4, and sub-node 5 belong to another vertical subnet. In the architecture of FIG. 1A, it can be layered in advance according to the preset properties of the node. For example, the gateway type attribute and/or end-point type attribute, etc. However, it is not limited thereto. The gateway type attribute includes a virtual authenticator base station and a road side unit. For example, the sub-node 1 may be a virtual authenticator base station, and the sub-node 2 may be a roadside unit. The end-point type attribute includes a vehicle and a drone. For example, the sub-node 3 may be a vehicle, and the sub-node and the sub-node 5 may be a drone or the like. However, it is not limited thereto.

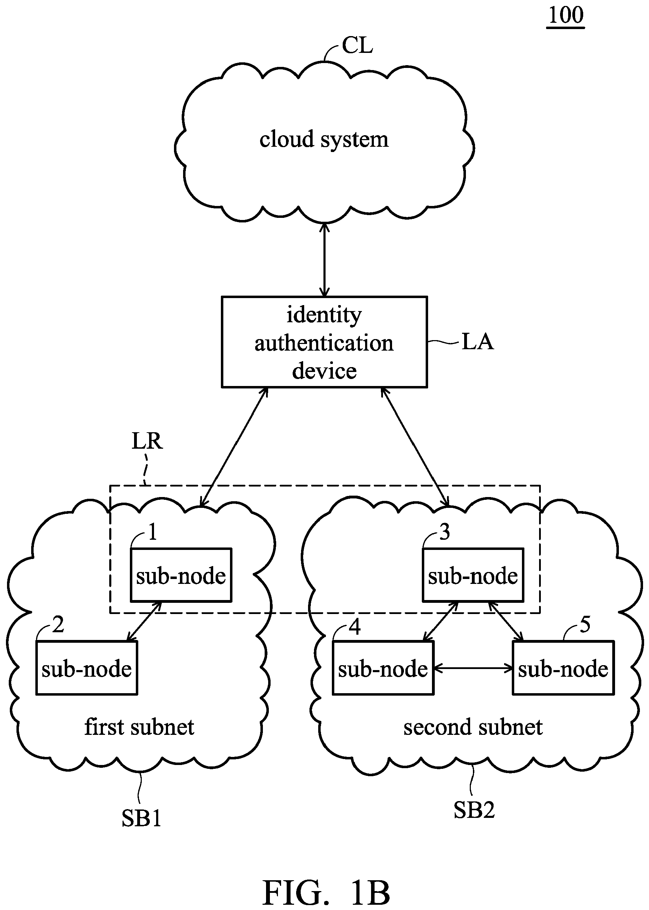

Refer to FIG. 1B, if the network security system 100 is in a horizontal view, the sub-nodes 1 and 3 in the hierarchical LR belong to the same cross-subnet (also called cross cluster).

In some embodiment, the sub-nodes 1-5 can each be replaced by a fog computing host.

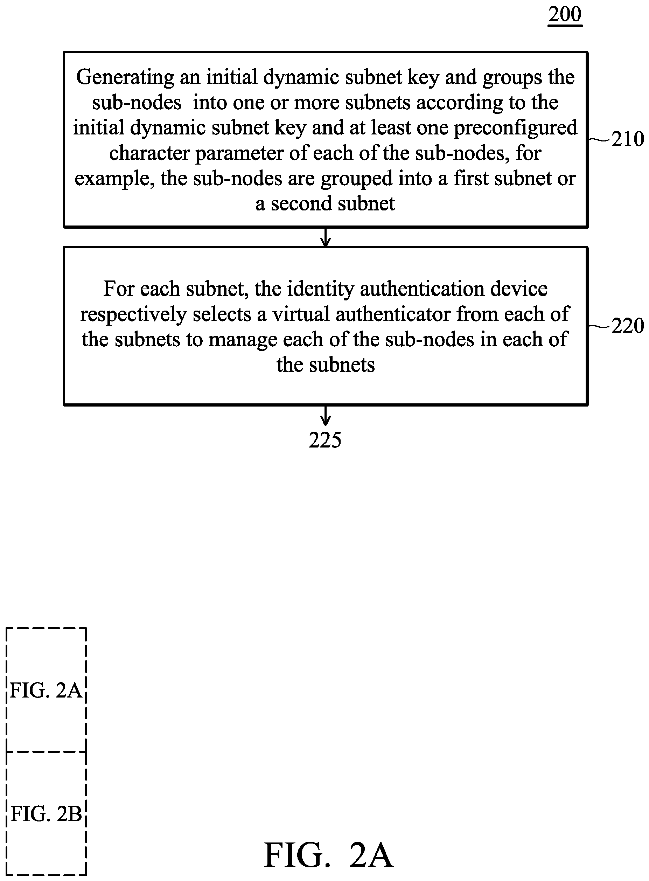

FIGS. 2A-2B are flowcharts of a network security method 200 in accordance with one embodiment of the present disclosure.

In step 210, the identity authentication device LA generates an initial dynamic subnet key (also known as a key) and groups the sub-nodes 1-5 as one or more subnets according to the initial dynamic subnet key and at least one preconfigured character parameter of each of the sub-nodes. For example, as shown in FIGS. 1A-1B, the sub-nodes 1-5 are grouped into a first subnet SB1 or a second subnet SB2.

In one embodiment, the preconfigured character parameter may be at least one or a combination of: coverage, workload, capacity, the number of identity authentication devices, the number of dynamic subnet keys, and the preset identification code, etc.

In step 220, for each subnet in the one or more subnets, the identity authentication device LA respectively selects a virtual authenticator (e.g., the respective local virtual authenticator) from each of the one or more subnets to manage each of the sub-nodes in each of the one or more subnets. In the following steps, the second subnet SB2 will be taken as an example to continue describing the process.

Please refer to FIGS. 1A-1B, in one embodiment, in step 225, the virtual authenticator of the second subnet SB2 determines whether a new sub-node member is added to the second subnet SB2 or one of the old member sub-nodes is left from the second subnet SB2. If it is determined that a new sub-node member is added to the second subnet SB2, the step 230 is performed. If it is determined that one of the old member sub-nodes is left from the second subnet SB2, the step 240 is performed.

In step 230, when a new sub-node member (for example, sub-node 5) joins the second subnet SB2, each sub-node (for example, sub-node 4) already existing in the second subnet SB2 and the virtual authenticator (for example, sub-node 3) of the second subnet SB2 each input a current version dynamic subnet key into a hash algorithm, and the current version dynamic subnet key is updated to perform a cross-authentication process between the virtual authenticator and the new sub-node member, and perform a consensus update process of the virtual authenticator and each sub-node already existing in the second subnet SB2, so that each sub-node existing in the second subnet SB2 and the virtual authenticator of the second subnet SB2 reach a consensus. In other words, the existing sub-node and the virtual authenticator update the current version dynamic subnet key of the second subnet SB2 to perform a consensus update process of the virtual authenticator and the existing sub-node 4.

When a new sub-node member joins the second subnet SB2, the new sub-node member and the virtual authenticator of SB2 perform a cross-authentication to update the data of the second subnet SB2. In one embodiment, during the cross-authentication process, the virtual authenticator generates a signature by a digital signature process or generates a message authentication code by a message authentication process, encrypts the signature or the message authentication code with all the data of the second subnet SB2 by a communication key to generate an encrypted data, and transmits the encrypted data to the new sub-node member, so that the new sub-node member decrypts according to the communication key to obtain all the data of the second subnet SB2, the signature or the message authentication code, and performs the digital signature process to verify the signature or performs the message authentication process to verify the message authentication code to perform data update of the sub-nodes of the second subnet SB2. The updated version of the current version dynamic subnet key and the data of the new sub-node member are comprised in all the data of the second subnet SB2. The virtual authenticator stores the updated current version dynamic subnet key and the data of the new sub-node member, and the new sub-node member also stores all the obtained second subnet SB2 data (including the updated current version dynamic subnet key). In one embodiment, in the step 230 may apply Forward Secrecy/Security (FS) technology, which is a security attribute of a communication protocol in cryptography, meaning that in long-term use, the leakage of the primary key does not lead to the leakage of past session keys. Forward secrecy protects past communications from the threat of passwords or keys being exposed in the future.

Therefore, when the new sub-node member joins the second subnet SB2, each sub-node node in the second subnet SB2 and its virtual authenticator are updated to the latest state of the second subnet SB2.

In step 240, when an old sub-node member (for example, sub-node 5) leaves the second subnet SB2, the virtual authenticator (for example, sub-node 3) inputs the current version dynamic subnet key and a random number into the hash algorithm to update the current version dynamic subnet key, and transmits the updated version of the current version dynamic subnet key to each of the remaining sub-nodes (for example, sub-node 4) in the second subnet SB2 to perform the consensus update process of the virtual authenticator and each of the remaining sub-nodes in the second subnet SB2, so as to make the remaining sub-nodes in the second subnet SB2 and the virtual authenticator reach the consensus. In one embodiment, the step 240 may apply a backward secrecy/security technique. The security attribute of forward secrecy and backward secrecy of a communication protocol in cryptography refers to the ability to protect the communications from exposure after adding newly data.

Therefore, after the old sub-node member leaves the second subnet SB2, the virtual authenticator of the second subnet SB2 transmits the updated current version dynamic subnet key to the remaining sub-nodes of the second subnet SB2, so as to enable the remaining child nodes to reach a consensus with the virtual authenticator. In one embodiment, virtual authenticator and members of the subnet SB2 delete the stored data of the leaving old member.

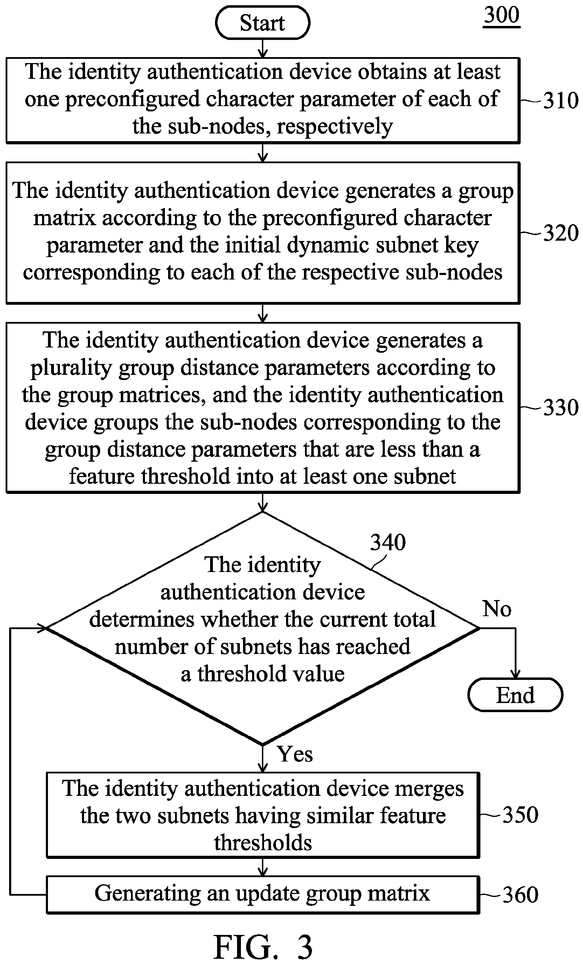

FIG. 3 is a flowchart of a sub-node grouping process 300 in accordance with one embodiment of the present disclosure. In one embodiment, a signal transmission range of the identity authentication device LA covers the sub-nodes 1-5.

In step 310, the identity authentication device LA obtains at least one preconfigured character parameter of each of the sub-nodes 1 to 5, respectively.

In one embodiment, the at least one preconfigured character parameter is at least one or a combination of: a communication range, a workload amount, a data capacity, a number of the identity authentication devices, a number of dynamic subnet keys, and a preset identification code.

In step 320, the identity authentication device LA generates a group matrix according to the initial dynamic subnet key and the at least one preconfigured character parameter corresponding to each of the sub-nodes 1-5, respectively.

In one embodiment, assuming that there are three sub-nodes 1, 2, and 3 in the communication range of the identity authentication device LA, the identity authentication device LA generates two initial dynamic subnet keys: a dynamic subnet key DSK1 (for example, 1) and a dynamic subnet key DSK2 (for example, 2). The identity authentication device LA calculates to divide 1 by 1 (i.e., DSK1) to obtain the parameter α value, and divide 1 by 2 (i.e., DSK2) to obtain the parameter β value. The parameter α value and the parameter β value of the group matrix are used for controlling the parameters of the subnet grouping. In one embodiment, the parameter multiplier can be adjusted according to the actual situation with a dynamic subnet key (DSK). In this embodiment, according to the preconfigured character parameter, the identity authentication device LA calculates the distance between the sub-nodes 1 and 2 is 10, the distance between the sub-nodes 1 and 3 is 800, the distance between the sub-nodes 1 and 2 is 900, and the sub-nodes 1 and 5 is 1000, the distance between sub-nodes 2 and 3 is 900, the distance between sub-nodes 2 and 4 is 800, the distance between sub-nodes 2 and 5 is 1000, the distance between sub-nodes 3 and 4 is 12, and the distance between sub-nodes 3 and 5 is 10, the distance between the sub-nodes 4 and 5 is 20, and the output group matrix (i.e., the original matrix, raw matrix) can be expressed as shown in Table 1 below. In an embodiment, the method for generating the group matrix can adopt a known algorithm, so it will not be described here.

**Table 1**

| group matrix | sub-node 1 | sub-node 2 | sub-node 3 | sub-node 4 | sub-node 5 |
|---|---|---|---|---|---|
| sub-node 1 | 0 | 10 | 800 | 900 | 1000 |
| sub-node 2 | 10 | 0 | 900 | 800 | 1000 |
| sub-node 3 | 800 | 900 | 0 | 12 | 10 |
| sub-node 4 | 900 | 800 | 12 | 0 | 20 |
| sub-node 5 | 1000 | 1000 | 10 | 20 | 0 |

In step 330, the identity authentication device LA generates a plurality group distance parameters according to the group matrices. And, the identity authentication device LA groups the sub-nodes corresponding to the group distance parameters that are less than a feature threshold as a subnet of one or more subnets. For example, the sub-nodes 1, 2 are grouped into the first subnet SB1. In the same manner, the sub-node 3 to 5 are grouped to the second subnet SB2. The sub-nodes with similar distances can be merged into one sub- subnet by the feature threshold, so that the distance between the nodes in the same subnet is the smallest. In one embodiment, the aforementioned distance may be a straight line distance.

In one embodiment, the identity authentication device LA receives the group matrix shown in Table 1, and multiplies the column by the value of α according to the row, and multiplies the column by the value of β. For example, multiply the value in the upper right block of the diagonal of Table 1 by the β value (such as 0.5), and multiply the value in the lower left block of the diagonal of Table 1 by the α value (such as 1) to perform the adjustment, so as to output Table 2. Table 2 represents the group distance parameters of the group matrix. That is, the parameters of the group matrix can be adjusted to obtain the group distance parameters of the group matrix. When i<j, then the group distance parameter (sub-node i, sub-node j) = distance (sub-node i, sub-node j) ^{∗} α, when i>j, the group distance parameter (sub-node i, sub-node j) = distance (sub-node i, sub-node j) ^{∗} β. Notation i and j are nature numbers.

**Table 2**

| group matrix | sub-node 1 | sub-node 2 | sub-node 3 | sub-node 4 | sub-node 5 |
|---|---|---|---|---|---|
| sub-node 1 | 0 | 5 (C2) | 400 | 450 | 500 |
| sub-node 2 | 10 | 0 | 450 | 400 | 500 |
| sub-node 3 | 800 | 900 | 0 | 6(C1) | 5 |
| sub-node 4 | 900 | 800 | 12 | 0 | 10 |
| sub-node 5 | 1000 | 1000 | 10 | 20 | 0(C3) |

Take the data in the upper right or lower left corner of the diagonal, each data can be regarded as a subnet (or cluster). For example, if there are 10 data in the upper right corner of the diagonal line, the initial state can be regarded as 10 subnets, and the two subnets with the closest distance between all subnets are found to be merged. In this case, after merging, total 3 subnets are produced, for example, subnet C1 (including sub-node 3, sub-node 4), subnet C2 (including sub-node 1, sub-node 2), and subnet C3 (including sub-node 5). In this embodiment, the manner of merging is determined by first selecting one of the smallest group distance parameters in the subnet in the upper right corner of the diagonal (for example, the group distance parameter 6 corresponding to the sub-node 3 and the sub-node 4), combining the sub-node 3 and the sub-node 4 into subnet C1, and then finding one of the smallest group distance parameters in other subnets in the upper right corner of the diagonal (for example, group distance parameter 5 corresponding to sub-node 1 and sub-node 2), combining the sub-node 1 and the sub-node 2 into subnet C2. And, the remaining child nodes 5 are self-contained into the subnet C3. In other words, after the adjustment in this embodiment, the largest distance between the sub-nodes in the subnet C1 is 6, and the largest distance between the sub-nodes in the subnet C2 is 5, and the largest distance between the sub-node(s) in the C3 subnet is 0. In the same way, the subnet merge process continues until the total number of subnets has not reached the threshold value. However, the manner of merging adjacent subnets is not limited to thereto.

In one embodiment, the identity authentication device LA performs group operations on each group matrix, for example, matrix multiplication, inverse operation, or other operations to generate group distance parameters.

In an embodiment, the group distance parameter refers to each constant in the group matrix. By comparing the group distance parameters in the plurality of group matrices, it can be known whether the group matrix patterns are similar. For example, when the difference between the values of the distance parameters of the corresponding positions in the two different group matrices is less than the feature threshold (for example, 2), that is, when the difference between the constants of the corresponding positions in the two different group matrices is less than 2, the two group matrices are clustered into one subnet (for example, the first subnet SB1). For example, the two group matrices respectively correspond to the sub-node 1 (for example, an electronic device on a car) and the sub-node 2 (for example, an electronic device on a car). If the preconfigured character parameters of the two are similar, it is likely that the group distance parameters of the two are similar, and the distance between the two is closer, so they are grouped into the same subnet. The sub-nodes with the smallest distance difference between each other can be grouped into the same subnet by the feature threshold.

In step 340, the identity authentication device LA determines whether a current total number of the one or more subnets reaches a threshold value. If the identity authentication device LA determines that the current total number of the one or more subnets has not reached the threshold value, the step 350 is performed. If the identity authentication device LA determines that the current total number of the one or more subnets has reached (or equaled to) the threshold value, the process is ended.

In one embodiment, when the identity authentication device LA stores a preset threshold value (for example, 2), and the current total number of subnets (for example, 10 subnets) is known by step 330, the step 350 is performed.

In one embodiment, when the identity authentication device LA stores a preset threshold value (for example, 2), and the current total number of subnets (for example, 2 subnets) is known by step 330, the process is ended.

In step 350, the identity authentication device LA merges two subnets of the one or more subnets having similar feature thresholds. In one embodiment, the identity authentication device LA obtains the current total number of subnets to find the two subnets (for example, subnets C1 and C3) that are closest to each other among the subnets (or groups). That is, two subnets with similar feature thresholds are combined into one new subnet. In this embodiment, the largest distance of the sub-nodes in the subnet C1 and the subnet C2 is 450, and the largest distance of the sub-nodes in the subnet C1 and the subnet C3 is 6. The subnet C1 and the subnet C3 are selected to be combined as a new subnet.

In one embodiment, the identity authentication device LA will continuously merge the two subnets with similar feature thresholds until the current total number of subnets reaches the preset threshold value.

In one embodiment, the first subnet SB1 and the second subnet SB2 are the two closest subnets.

In step 360, the identity authentication device LA generates an update group matrix. In one embodiment, the identity authentication device LA re-enters the step 340 to determine whether the current total number of subnets reaches a threshold value (for example, 2) until the current total number of subnets has been merged into a state that the amount corresponding to (i.e., the current total number equal to) the threshold value. When the current total number of subnets has been merged into the state that the amount corresponding to the threshold value, the grouping process is finished. In one embodiment, the above steps can be applied to the FIG. 1A and the FIG. 1B, and the identity authentication device LA performs grouping of a plurality of sub-nodes (e.g., sub-nodes 1 to 5) in the wireless ad hoc network.

Since the foregoing refers to the consensus update in steps 230-240, the following paragraphs describe the process flow of the consensus update.

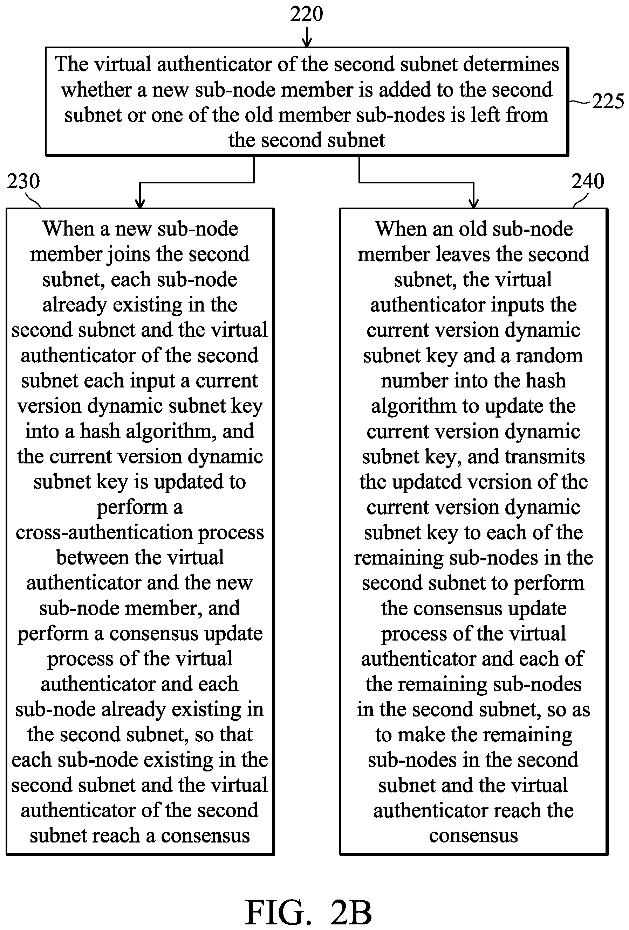

In one embodiment, the consensus update refers to each existing sub-node (for example, the second subnet SB2) or remaining sub-nodes in each subnet (for example, in step 230 or in step 240 of the sub-node 4 in the embodiment of the FIG.2) inputs the updated current version dynamic subnet key and/or the data of a sub-node member of the one subnet into a hash algorithm to respectively generate a sub-node ledger digest. The virtual authenticator of each subnet (for example, the second subnet SB2) inputs the updated current version dynamic subnet key and/or the data of the sub-node member of the one subnet into the hash algorithm to generate an expected ledger digest, and when the virtual authenticator determines that each sub-node ledger digest of the sub-nodes are the same as the expected ledger digest, then each existing sub-node or remaining sub-nodes in each subnet in the each subnet (for example, the second subnet SB2) and the virtual authenticator reach the consensus. In accordance with the consensus update process is triggered when the new sub-node member joins the subnet or the old sub-node member leaves the subnet, the data of the sub-node member of the one subnet is data of the new sub-node member joins the subnet or data of the old sub-node member leaves the subnet correspondingly. The input to the hash algorithm can be predefined to generate the ledger digest and the expected ledger digest for each sub-node. The data of the sub-node member of the one subnet can be, for example, its ID, public key, or internet IP, etc. However, it is not limited thereto.

In one embodiment, updated version of the current version dynamic subnet key can be generated by the current version dynamic subnet key before updating and a random number. The current version dynamic subnet key before updating and a random number are inputted into a hash algorithm to generate updated version of the current version dynamic subnet key. Or, the current version dynamic subnet key before updating is inputted into a hash algorithm to generate updated version of the current version dynamic subnet key.

In one embodiment, the Merkle tree algorithm, also commonly referred to as the hash tree, is a tree that stores hash values. The ledger digest refers to the contents of the root node of this tree data structure. The leaves of the Merkel tree are the hash values of the data block (for example, the data of the current version dynamic subnet key and/or the sub-node member of subnet, etc.). In the non-leaf node is the hash value of the concatenation string of its sub-nodes corresponding to the Merkle tree. The details of the Merkle tree algorithm are known and will not describe here.

Therefore, by comparing the sub-node ledger digest (for example, the ledger digest for sub-node 4) with the expected ledger digest (for example, the ledger digest for the virtual authenticator), it is possible to quickly know whether each sub-node (for example, sub-node 4) and the virtual authenticator (for example, sub-node 3) reach a consensus.

In one embodiment, the identity authentication device LA (e.g., the first subnet SB1 and the second subnet SB2) respectively selects a virtual authenticator (for example, sub-node 1 in the first subnet SB1 and sub-node 2 in the second subnet SB2) from each of the one or more subnets to manage each of the sub-nodes in each of the subnets. For example, the sub-node 1 manages the sub-nodes 1, 2 in the first subnet SB1, and the sub-node 3 manages the sub-nodes 3 to 5 in the second subnet SB2. The identity authentication device LA can select a virtual authenticator in different ways. The following paragraphs describe an embodiment flow for selecting a virtual authenticator for each subnet in each of the subnets.

As an example in one embodiment, the identity authentication device LA respectively measures and calculates the at least one preconfigured character parameter of each of the sub-nodes of the first subnet (e.g., the sub-node 1 and the sub-node 2) to respectively generate a candidate parameter corresponding to the identity authentication device LA and each of the sub-nodes (e.g., the sub-node 1 and the sub-node 2), sort the values of the candidate parameters to generate a candidate list (e.g., the candidate parameter corresponding to the child node 1 in the candidate list is 2, the candidate parameter corresponding to the child node 2 in the candidate list is 1), and select according to one of at least one sub-node corresponding to the largest one of the values of the candidate parameters (e.g., the sub-node 1) as the virtual authenticator. The virtual authenticator (e.g., the sub-node 1) manages all the sub-nodes (e.g., the sub-node 1 and the sub-node 2) in the first sub-net SB1. In this case, if the identity authentication device LA determines that the virtual authenticator (for example, the sub-node 1) selected at the beginning having too much loading, or the transmission range of the identity authentication device LA is about to leave, or other resources are about to be insufficient, then the identity authentication device LA or the original virtual authenticator selects another sub-node (for example, the sub-node 2) corresponding to the next highest value of the candidate parameters from the candidate list (or called the virtual authenticator selection candidate list) as a new virtual authenticator.

In one embodiment, the identity authentication device LA selects the maximum value according to a weighted combination of preconfigured character parameters. At the time of initialization, when the identity authentication device LA initially selects the maximum value according to a weighted combination of preconfigured character parameters, the identity authentication device LA calculates the order of selecting the virtual authenticator in candidate list according to preconfigured character parameters. For example, VA(N) = max((-α)× WL +β× HS +γ× CA +δ×OT), α+β+γ+δ = 1, the symbol VA(N) is the value of the candidate parameter of the virtual authenticator or the value of the weighted combination, and has a total of N VA values. The symbol WL is the workload. The symbol HS is Hardware Supported. The symbol CA is capacity. The symbol OT is Other Factors. In one embodiment, the identity authentication device LA assigns the maximum value of VA(N) (for example, the first column of the candidate list is sub-node 1, which has the largest weighting parameter) as a new virtual authenticator, and delivers the initial dynamic subnet key. The initial dynamic subnet key (first initial value) is given to the new virtual authenticator and the candidate list (which is called virtual authenticator selection candidate list below) for selecting the virtual authenticator is released.

In one embodiment, the identity authentication device LA updates the virtual authenticator selection candidate list. The new virtual authenticator generates and releases new virtual authenticator selection candidate list. And, the subnet status is monitored regularly by all members in subnet. In one embodiment, the virtual authenticator selection candidate list is initially released by the identity authentication device LA, and then the virtual authenticator selection candidate list can be updated and released by the new virtual authenticator.

In one embodiment, the members of the entire subnet (for example, the sub-nodes 1 to 2 shown in the 1A to 1B) periodically monitor the preconfigured character, and the members of the entire subnet periodically broadcast the node data (for example, the preconfigured character are a certain data and energy). If the identity authentication device LA or subnet member finds that the new virtual authenticator (for example, sub-node 1) is overloaded, leaves the subnet, the authentication delay time becomes longer, the communication status is unstable, etc., the second column of the candidate list is released. The corresponding sub-node (for example, sub-node 2) informs the virtual authenticator (for example, sub-node 1) that it will be replaced by the sub-node 2 as a new virtual authenticator. The sub-node 2 publishes the information to the whole network: the virtual authenticator is rotated by sub-node 2. The virtual authenticator selection candidate list is updated again. And, the subnet status is periodically monitored. In one embodiment, the virtual authenticator selection candidate list is initially released by the identity authentication device LA, and may then be released by a virtual authenticator (e.g., sub-node 1) or its candidate. In one embodiment, when the full subnet member is regularly monitored, and it is found that the virtual authenticator (for example, sub-node 1) must be replaced, then the new virtual authenticator (for example, sub-node 2) is updated the release.

In one embodiment, the preconfigured character can be the workload, hardware support state (because key related data is protected by hardware), hardware capacity, etc. Hardware support refers to a plain text-encrypted plain text format job that is specifically designed to provide a protected space that protects the encryption and signature keys during their most vulnerable stages.

In one embodiment, the identity authentication device LA causes each of the sub-nodes (e.g., the sub-node 1 and the sub-node 2) of the first subnet (e.g., the first subnet 1) takes a token ring in turn, and the sub-node that obtains the token ring becomes the virtual authenticator. In this embodiment, in the initialization step, when the identity authentication device LA initially makes each sub-node (for example, the sub-node 1 and the sub-node 2) in the first subnet (such as the first subnet SB1) takes turns to obtain a token ring. The sub-node taking the token ring is assigned to be the virtual authenticator. The identity authentication device LA rotates to assign the virtual authenticator. Or, the sub-nodes are in the order of passing the token ring, so that the current sub-node (for example, the sub-node 1) automatically transmits the token ring to the next sub-node (for example, the sub-node 2). And, it is regularly monitored by all subnet members. When one of the members of the entire subnet monitors that the current virtual authenticator is abnormal, the current virtual authenticator of the subnet needs to be replaced, and the next sub-node in the order of the token ring is assigned as new virtual authenticator and uses for updating the release.

In one embodiment, a token ring list is initially released by the identity authentication device LA. And then, the sub-nodes periodically transmit the token ring according to the token ring list, and the sub-nodes take turns to become a virtual authenticator.

In one embodiment, the identity authentication device LA can select a virtual authenticator in different ways, and automatically manages each subnet by automatically selecting a virtual authenticator (for example, the first subnet SB1 and the second subnet SB2 each has a virtual authenticator). And, the virtual authentication has the failure migration mechanism, the authentication time to verify nodes can be accelerated and the cost of deployment can be reduced. In one embodiment, after the initial virtual authenticator or the new virtual authenticator is selected, each subnet node in the virtual authenticator selection candidate list will also perform a failover mechanism. In one embodiment, the failover mechanism provides a more direct and reliable user access service for higher availability.

In one embodiment, the failover mechanism is: periodically backing up subnet data and selecting a (new) virtual authenticator. For example, the local virtual authenticator of one of the one or more subnets dynamically or according to a preset rule sorts the virtual authenticator selection candidate list according to the workload of the subnet member, and each sub-node in the candidate list periodically backs up the data of the subnet. Taking the second subnet as an example, when the current virtual authenticator (for example, sub-node 3) fails or wants to leave, a service requesting sub-node (for example, sub-node 5) in the subnet (e.g., the second subnet) broadcasts a proposed service. If the request fails, respond to the service request from the service request sub-node, update another virtual authenticator (for example, sub-node 4) from the candidate list of the second subnet to become a new virtual authenticator of the subnet. In one embodiment, the other virtual authenticator is selected from the candidate list of the subnet. For example, the second order is the sub-node 4, which responds to the service request made by the service request sub-node, and the updated virtual authenticator (for example, the sub-node 4) takes over the work of backing up the data of the second subnet. The network security system and the network security method shown in the present invention can perform distributed dynamic adjustment security authentication more quickly when the number of nodes in the network (for example, wireless ad hoc network) is frequently changed, so as to achieve the effect of safely protecting the data which user wants to store or transfer.

Although the invention has been illustrated and described with respect to one or more implementations, equivalent alterations and modifications will occur or be known to others skilled in the art upon the reading and understanding of this specification and the annexed drawings. In addition, while a particular feature of the invention may have been disclosed with respect to only one of several implementations, such a feature may be combined with one or more other features of the other implementations as may be desired and advantageous for any given or particular application.

## Claims

1. A network security system (100), comprising:
a plurality of sub-nodes (1∼3); and
an identity authentication device (LA), configured to generate an initial dynamic subnet key, group the sub-nodes into one or more subnets (SB1, SB2) according to the initial dynamic subnet key and at least one preconfigured character parameter of each of the sub-nodes (1∼3),
wherein, for each subnet in the one or more subnets (SB1, SB2), the identity authentication device (LA) respectively selects a virtual authenticator from each of the one or more subnets to manage each of the sub-nodes in each of the one or more subnets,
wherein when a new sub-node member (5) joins one subnet of the one or more subnets, each sub-node already existing in the one subnet and the virtual authenticator of the one subnet each input a current version dynamic subnet key into a hash algorithm to update the current version dynamic subnet key, for performing a cross-authentication process between the virtual authenticator and the new sub-node member, and performing a consensus update process of the virtual authenticator and each sub-node already existing in the one subnet, so that each sub-node existing in the one subnet and the virtual authenticator reach a consensus, and
wherein when an old sub-node member (5) leaves the one subnet of the one or more subnets, the virtual authenticator of the one subnet inputs the current version dynamic subnet key and a random number into the hash algorithm to update the current version dynamic subnet key, and transmits the updated version of the current version dynamic subnet key to each of the remaining sub-nodes in the one subnet to perform the consensus update process of the virtual authenticator and each of the remaining sub-nodes in the one subnet, so as to make the remaining sub-nodes in the one subnet and the virtual authenticator reach the consensus.

2. The network security system of claim 1, wherein the sub-nodes are covered by a signal transmission range of the identity authentication device (LA), the identity authentication device (LA) respectively obtains the at least one preconfigured character parameter of each of the sub-nodes to generate a plurality of group matrices according to the initial dynamic subnet key and the at least one preconfigured character parameter corresponding to each of the sub-nodes respectively, generates a plurality of group distance parameters according to the group matrices, and groups sub-nodes corresponding to the group distance parameters that are less than a feature threshold as a subnet of the one or more subnets.

3. The network security system of claim 2, wherein the identity authentication device (LA) determines whether a current total number of the one or more subnets reaches a threshold value, if the identity authentication device (LA) determines that the current total number of the one or more subnets has not reached the threshold value, the identity authentication device (LA) merges two subnets of the one or more subnets having similar feature thresholds.

4. The network security system of claim 1, wherein the consensus update process further comprising:
each of the sub-nodes in the one subnet inputs the updated current version dynamic subnet key and/or data of a sub-node member of the one subnet into a hash algorithm to respectively generate a sub-node ledger digest; and
the virtual authenticator inputs the updated current version dynamic subnet key and/or data of the sub-node member of the one subnet into the hash algorithm to generate an expected ledger digest, and when the virtual authenticator determines that each sub-node ledger digest of the sub-nodes are the same as the expected ledger digest, then each of the sub-nodes in the one or more subnets and the virtual authenticator reach the consensus.

5. The network security system of claim 4, wherein in accordance with the new sub-node member (5) joins the one or more subnets or the old sub-node member leaves the one or more subnets to trigger the consensus update process, the data of the sub-node member of the one subnet is data of the new sub-node member joins the one or more subnets or data of the old sub-node member leaves the one or more subnets correspondingly, and wherein a way that the hash algorithm is inputted to generate each of the sub-node ledger digest and the expected ledger digest is predefined.

6. The network security system of claim 1, wherein at least one preconfigured character parameter is at least one or a combination of: a communication range, a workload amount, a data capacity, a number of the identity authentication devices, a number of dynamic subnet keys, and a preset identification code.

7. The network security system of claim 1, wherein the identity authentication device (LA) respectively calculates the at least one preconfigured character parameter of each of the sub-nodes of each of the one or more subnets to respectively generate a candidate parameter corresponding to the identity authentication device and each of the sub-nodes in the each of the one or more subnets, sorts values of the candidate parameters to generate a candidate list of each of the one or more subnets, and selects according to one of at least one sub-node corresponding to the largest one of the values of the candidate parameters as the virtual authenticator of each the one or more subnet.

8. The network security system of claim 7, wherein each of the sub-nodes in the candidate list of the one subnet performs a failover mechanism, and the failover mechanism comprises:
each sub-node in the candidate list of the one subnet periodically backs up data of the one subnet; and
when the virtual authenticator of the one subnet fails or wants to leave, and a service request initiated by a service requesting sub-node in the one subnet is failed, respond to the service request, update another virtual authenticator in the candidate list of the one subnet to become new virtual authenticator of the one subnet.

9. The network security system of claim 8, wherein the another virtual authenticator (4) is selected from the candidate list of the one subnet.

10. The network security system of claim 1, wherein each of the sub-nodes of each of the one or more subnets takes a token ring in turn, and sub-node that obtains the token ring becomes the virtual authenticator of each of the subnets, and/or wherein during the cross-authentication process, the virtual authenticator generates a signature by a digital signature process or generates a message authentication code by a message authentication process, encrypts the signature or the message authentication code with all data of the one subnet by a communication key to generate an encrypted data, and transmits the encrypted data to the new sub-node member, so that the new sub-node member decrypts according to the communication key to obtain all the data of the one subnet, the signature or the message authentication code, and performs the digital signature process to verify the signature or performs the message authentication process to verify the message authentication code, to perform data update of sub-nodes of the one subnet, and wherein the updated version of the current version dynamic subnet key and the data of the new sub-node member are comprised in all the data of the one subnet.

11. A network security method (200), comprising:
generating an initial dynamic subnet key (210); and
grouping a plurality of sub-nodes into one or more subnets according to the initial dynamic subnet key and at least one preconfigured character parameter of each of the sub-nodes (210),
wherein, for each subnet in the one or more subnets, an identity authentication device respectively selects a virtual authenticator from each of the one or more subnets to manage each of the sub-nodes in each of the one or more subnets (220),
wherein when a new sub-node member joins one subnet of the one or more subnets, each sub-node already existing in the one subnet and the virtual authenticator of the one subnet each input a current version dynamic subnet key into a hash algorithm to update the current version dynamic subnet key, for performing a cross-authentication process between the virtual authenticator and the new sub-node member, and performing a consensus update process of the virtual authenticator and each sub-node already existing in the one subnet, so that each sub-node existing in the one subnet and the virtual authenticator reach a consensus (230), and
wherein when an old sub-node member leaves the one subnet of the one or more subnets, the virtual authenticator of the one subnet inputs the current version dynamic subnet key and a random number into the hash algorithm to update the current version dynamic subnet key, and transmits the updated version of the current version dynamic subnet key to each of the remaining sub-nodes in the one subnet to perform the consensus update process of the virtual authenticator and each of the remaining sub-nodes in the one subnet, so as to make the remaining sub-nodes in the one subnet and the virtual authenticator reach the consensus (240).

12. The network security method of claim 11, wherein the sub-nodes are covered by a signal transmission range of the identity authentication device, the network security method further comprising:
respectively obtaining the at least one preconfigured character parameter of each of the sub-nodes by the identity authentication device to generate a plurality of group matrices according to the initial dynamic subnet key and the at least one preconfigured character parameter corresponding to each of the sub-nodes respectively (320), generating a plurality of group distance parameters according to the group matrices (330), and grouping sub-nodes corresponding to the group distance parameters that are less than a feature threshold as a subnet of the one or more subnets.

13. The network security method of claim 12, further comprising:
determining whether a current total number of the one or more subnets reaches a threshold value (340); and
if the identity authentication device determines that the current total number of the one or more subnets has not reached the threshold value, the identity authentication device merges two subnets of the one or more subnets having similar feature thresholds (350).

14. The network security method of claim 11, wherein performing the consensus update process further comprising:
each of the sub-nodes in the one subnet inputs the updated current version dynamic subnet key and/or the data of a sub-node member of the one subnet into a hash algorithm to respectively generate a sub-node ledger digest (360); and
the virtual authenticator inputs the updated current version dynamic subnet key and/or data of the sub-node member of the one subnet into the hash algorithm to generate an expected ledger digest, and when the virtual authenticator determines that each sub-node ledger digest of the sub-nodes are the same as the expected ledger digest, then each of the sub-nodes in the one or more subnets and the virtual authenticator reach the consensus.

15. The network security method of claim 11, further comprising:
calculating the at least one preconfigured character parameter of each of the sub-nodes of each of the one or more subnets to respectively generate a candidate parameter corresponding to the identity authentication device and each of the sub-nodes in the each of the one or more subnets; and
sorting values of the candidate parameters to generate a candidate list of each of the one or more subnets, and selects according to one of at least one sub-node corresponding to the largest one of the values of the candidate parameters as the virtual authenticator of each the one or more subnet.
